# EUROPEAN PATENT SPECIFICATION

(11) **EP 4 596 915 B1**
(45) Date of publication and mention of the grant of the patent: **09.12.2026**
(21) Application number: 23871975.1
(22) Date of filing: 14.09.2023
(51) Int. Cl.: F16D 13/52, F16D 13/70, F16D 13/74

(54) **CLUTCH DEVICE, AND MOTORCYCLE**
KUPPLUNGSVORRICHTUNG UND MOTORRAD
DISPOSITIF D'EMBRAYAGE ET MOTOCYCLETTE

(30) Priority: 28.09.2022 JP 2022154813; 17.04.2023 JP 2023066867
(43) Date of publication of application: 06.08.2025
(73) Proprietor: Kabushiki Kaisha F.C.C., Hamamatsu-shi, Shizuoka 431-1394 (JP)
(72) Inventor: NAKAMURA Yuji, Hamamatsu-shi, Shizuoka 431-1394 (JP)
(74) Representative: Grünecker Patent- und Rechtsanwälte PartG mbB
(86) International application number: PCT/JP2023/033588
(87) International publication number: WO 2024/070742

(56) References cited:
- EP-A1- 3 998 412
- EP-A1- 4 339 472
- WO-A1-2021/210197
- WO-A1-2021/210197
- WO-A1-2024/058173
- JP-A- 2022 135 638
- JP-A- 2022 135 638

## Description

### TECHNICAL FIELD

The present invention relates to a clutch device and a motorcycle. More particularly, the present invention relates to a clutch device that arbitrarily allows or interrupts transfer of a rotation driving force of an input shaft that is rotationally driven by a prime mover such as an engine to an output shaft, and also relates to a motorcycle comprising the clutch device.

### BACKGROUND ART

Conventional vehicles such as motorcycles include clutch devices. A clutch device is disposed between an engine and a drive wheel and allows or interrupts transfer of a rotation driving force of the engine to the drive wheel. The clutch device generally includes a plurality of input-side rotating plates that rotate by a rotation driving force of an engine and a plurality of output-side rotating plates connected to an output shaft that transfers the rotation driving force to a drive wheel. The input-side rotating plates and the output-side rotating plates are alternately arranged in a stacking direction, and the input-side rotating plates and the output-side rotating plates are brought into pressure contact with each other and are separated from each other so that transfer of a rotation driving force is allowed or interrupted.

JP 6894792 B2, for example, discloses a clutch device including: a clutch center (clutch member) that holds output-side rotating plates (driven-side clutch discs); and a pressure plate (pressure member) movable toward and away from the clutch center. The pressure plate includes a flange that presses the input-side rotating plates and the output-side rotating plates. The flange presses the input-side rotating plates and the output-side rotating plates to thereby transfer a rotation driving force. In this manner, the clutch device employs an assembly of the clutch center and the pressure plate.

JP 2022 135638 A discloses a clutch device including a clutch outer, a clutch center and a pressure plate, with friction plates and clutch plates alternately arranged in an annular space between an outer cylindrical portion and a center cylindrical portion. An oil passage portion is formed in a clutch spring housing portion of the pressure plate at a position offset in a rotation-lagging direction, so as to guide oil toward the annular space.

WO 2021/210197 A1 discloses a power transmission device for a vehicle including a clutch housing, first and second clutch members, a pressure member, driving-side and driven-side clutch plates, and a centrifugal clutch mechanism. The centrifugal clutch mechanism includes a weight member movable between inner and outer radial positions and first and second spherical members arranged in a tapered through passage of the weight member.

EP 3 998 412 A1 discloses a clutch device for a straddled vehicle, including a clutch boss, a pressure plate, friction plates and clutch plates. Oil supplied into the boss portion is guided by a first concave portion at an inner peripheral surface of the boss portion, a second concave portion at the pressure plate, and a third concave portion at the pressure surface toward a friction plate located closest to the pressure surface.

### SUMMARY OF INVENTION

### Technical Problems

A relative slip occurs between the input-side rotating plates and the output-side rotating plates, resulting in occurrence of seizing between the input-side rotating plates and the output-side rotating plates. To reduce the seizing, clutch oil is supplied to the input-side rotating plates and the output-side rotating plates. Clutch oil is discharged to the outside from the inside of the clutch center to be supplied to the output-side rotating plates and the input-side rotating plates, for example. Since clutch oil is distributed outside the pressure plate, effective supply of clutch oil to the input-side rotating plates and the output-side rotating plates can further reduce seizing between the input-side rotating plates and the output-side rotating plates.

It is therefore an object of the present invention to provide a clutch device capable of effectively supplying clutch oil to input-side rotating plates and output-side rotating plates, and a motorcycle comprising the clutch device.

### Solution to Problem

According to the present invention, this object is achieved by a clutch device according to claim 1 and by a motorcycle according to claim 4. Further advantageous developments of the clutch device are defined in dependent claims 2 and 3.

In the clutch device according to the present invention, the flange includes the through hole located radially inward of the pressing surface. Thus, clutch oil distributed outside the pressure plate flows toward the pressing surface through the through hole. Since the input-side rotating plates and the output-side rotating plates are located ahead of the pressing surface in the first direction, clutch oil flowing toward the pressing surface through the through hole is supplied to the input-side rotating plates and the output-side rotating plates. In this manner, since the flange of the pressure plate includes the through hole located radially inward of the pressing surface, clutch oil distributed outside the pressure plate can be effectively supplied to the input-side rotating plates and the output-side rotating plates.

### Advantages of Invention

The present disclosure provides clutch devices each capable of more effectively supply clutch oil to input-side rotating plates and output-side rotating plates.

### BRIEF DESCRIPTION OF THE DRAWINGS

[FIG. 1] FIG. 1 is a cross-sectional view of a clutch device according to one preferred embodiment.
[FIG. 2] FIG. 2 is a perspective view of a clutch center according to one preferred embodiment.
[FIG. 3] FIG. 3 is a plan view of a clutch center according to one preferred embodiment.
[FIG. 4] FIG. 4 is a perspective view of a pressure plate according to one preferred embodiment.
[FIG. 5A] FIG. 5A is a plan view of a pressure plate according to one preferred embodiment.
[FIG. 5B] FIG. 5B is a cross-sectional view taken along line VB-VB in FIG. 5A.
[FIG. 6] FIG. 6 is a perspective view of a pressure plate according to one preferred embodiment.
[FIG. 7] FIG. 7 is a plan view of a pressure plate according to one preferred embodiment.
[FIG. 8] FIG. 8 is a plan view illustrating a state where a clutch center and a pressure plate according to one preferred embodiment are combined.
[FIG. 9A] FIG. 9A is a schematic view for describing effects of a center-side assist cam surface and a pressure-side assist cam surface.
[FIG. 9B] FIG. 9B is a schematic view for describing effects of a center-side slipper cam surface and a pressure-side slipper cam surface.

### DESCRIPTION OF PREFERRED EMBODIMENTS

Clutch devices according to preferred embodiments of the present disclosure will be described hereinafter with reference to the drawings. The preferred embodiments described herein are, of course, not intended to particularly limit the present disclosure. Elements and features having the same functions are denoted by the same reference characters, and description for the same elements and features will not be repeated or will be simplified as appropriate.

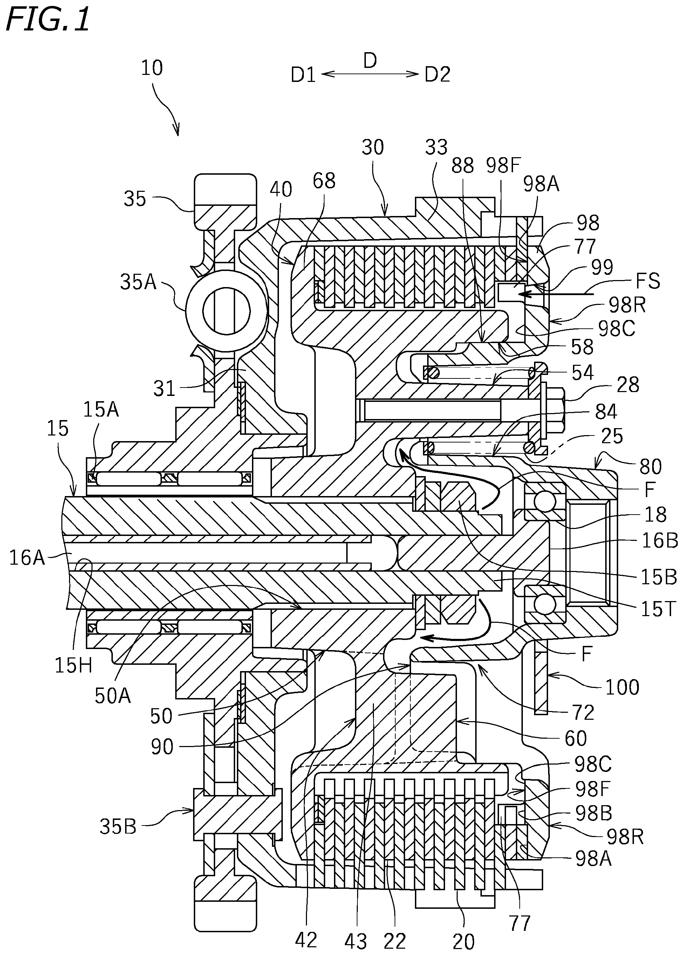

FIG. 1 is a cross-sectional view of a clutch device 10 according to this preferred embodiment. The clutch device 10 is provided in a vehicle such as a motorcycle, for example. The clutch device 10 allows or interrupts transfer of a rotation driving force of an input shaft (crankshaft) of an engine of the motorcycle to an output shaft 15, for example. The clutch device 10 allows or interrupts transfer of a rotation driving force of the input shaft to a drive wheel (rear wheel) through the output shaft 15. The clutch device 10 is disposed between the engine and a transmission.

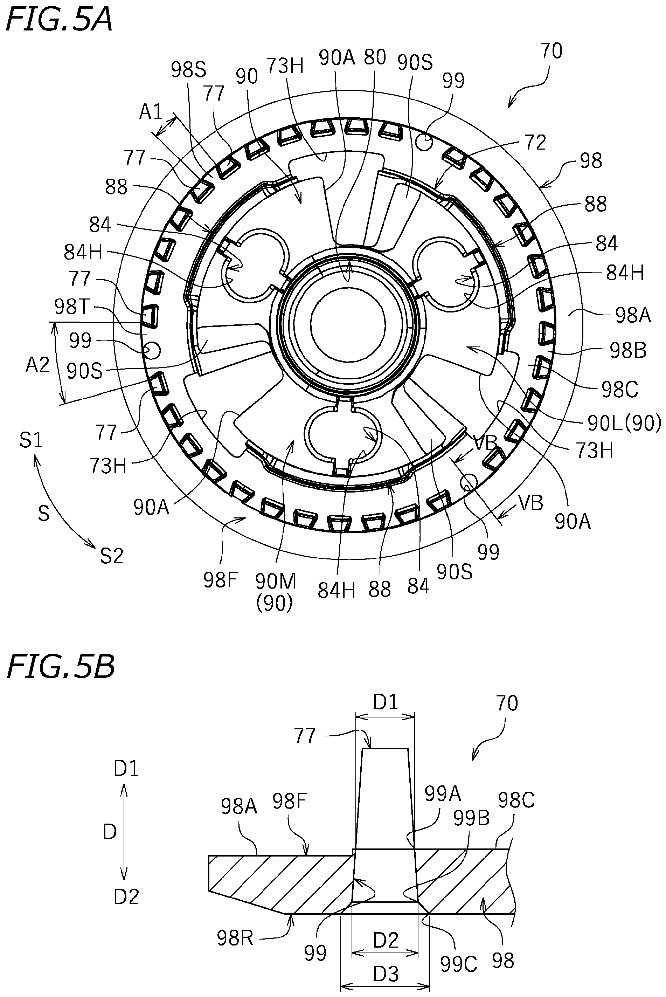

In the following description, directions in which a pressure plate 70 of the clutch device 10 and the clutch center 40 are arranged will be referred to as directions D, a direction in which the pressure plate 70 moves toward the clutch center 40 will be referred to as a first direction D1, and a direction in which the pressure plate 70 moves away from the clutch center 40 will be referred to as a second direction D2. Circumferential directions of the clutch center 40 and the pressure plate 70 will be referred to as circumferential directions S, one of the circumferential directions S from one pressure-side cam portion 90 to another pressure-side cam portion 90 will be referred to as a first circumferential direction S1 (see FIG. 5A), and one of the circumferential directions S from the other pressure-side cam portion 90 to the one pressure-side cam portion 90 will be referred to as a second circumferential direction S2 (see FIG. 5A). In this preferred embodiment, axial directions of the output shaft 15, axial directions of a clutch housing 30, axial directions of the clutch center 40, and axial directions of the pressure plate 70 are the same as the directions D. The pressure plate 70 and the clutch center 40 rotate in the first circumferential direction S1. It should be noted that the directions described above are defined simply for convenience of description, and are not intended to limit the state of installation of the clutch device 10 and do not limit the present disclosure.

As illustrated in FIG. 1, the output shaft 15 is a hollow shaft. One end of the output shaft 15 rotatably supports an input gear 35 described later and the clutch housing 30 through a needle bearing 15A. The output shaft 15 fixedly supports the clutch center 40 through a nut 15B. That is, the output shaft 15 rotates together with the clutch center 40. The other end of the output shaft 15 is coupled to a transmission (not shown) of a motorcycle.

As illustrated in FIG. 1, the output shaft 15 includes, in a hollow portion 15H thereof, a push rod 16A and a push member 16B adjacent to the push rod 16A. The hollow portion 15H serves as a channel of clutch oil. Clutch oil flows in the output shaft 15, that is, in the hollow portion 15H. The push rod 16A and the push member 16B are slidable in the hollow portion 15H of the output shaft 15. The push rod 16A has one end (left end in the drawing) coupled to a clutch operation lever (not shown) of the motorcycle, and slides in the hollow portion 15H by operation of the clutch operation lever and presses the clutch push member 16B in the second direction D2. A portion of the push member 16B projects outward of the output shaft 15 (in the second direction D2 in this preferred embodiment) and is coupled to a release bearing 18 provided on the pressure plate 70. The push rod 16A and the push member 16B are thinner than the inner diameter of the hollow portion 15H so that flowability of clutch oil is obtained in the hollow portion 15H.

The clutch housing 30 is made of an aluminum alloy. The clutch housing 30 has a bottomed cylindrical shape. As illustrated in FIG. 1, the clutch housing 30 includes a bottom wall 31 having a substantially circular shape, and a side wall 33 extending from an edge of the bottom wall 31 in the second direction D2. The clutch housing 30 holds the plurality of input-side rotating plates 20.

As illustrated in FIG. 1, an input gear 35 is disposed on the bottom wall 31 of the clutch housing 30. The input gear 35 is fixed to the bottom wall 31 by a rivet 35B through a torque damper 35A. The input gear 35 meshes with a driving gear (not shown) that rotates by rotational driving of the input shaft of the engine. The input gear 35 is rotationally driven together with the clutch housing 30, independently of the output shaft 15.

The input-side rotating plates 20 are rotationally driven by rotational driving of the input shaft. As illustrated in FIG. 1, the input-side rotating plates 20 are held on the inner peripheral surface of the side wall 33 of the clutch housing 30. The input-side rotating plates 20 are held in the clutch housing 30 by spline fitting. The input-side rotating plates 20 are displaceable along the axial direction of the clutch housing 30. The input-side rotating plates 20 are rotatable together with the clutch housing 30.

The input-side rotating plates 20 are pushed against the output-side rotating plates 22. The input-side rotating plates 20 are ring-shaped flat plates. Each of the input-side rotating plates 20 is shaped by punching a thin plate of a steel plate cold commercial (SPCC) material into a ring shape. Friction members (not shown) of a plurality of paper sheets are attached to the front and back surfaces of the input-side rotating plates 20. A groove with a depth of several micrometers to several tens of micrometers is formed between the friction members to retain clutch oil.

As illustrated in FIG. 1, the clutch center 40 is housed in the clutch housing 30. The clutch center 40 and the clutch housing 30 are concentrically disposed. The clutch center 40 includes a cylindrical body 42 and a flange 68 extending radially outward from the outer edge of the body 42. The clutch center 40 holds the plurality of output-side rotating plates 22 arranged alternately with the input-side rotating plates 20 in the directions D. The clutch center 40 is rotationally driven together with the output shaft 15.

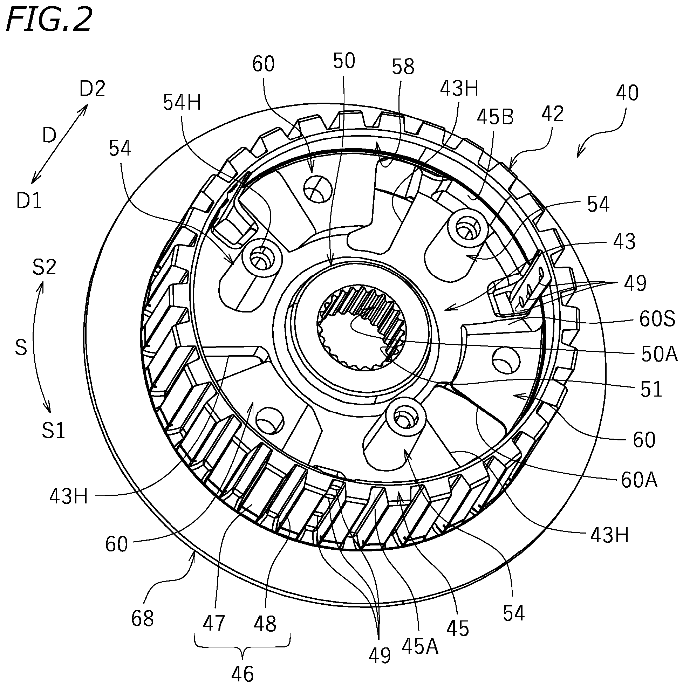

As illustrated in FIG. 2, the body 42 includes a ring-shaped base wall 43, an outer peripheral wall 45 located radially outward of the base wall 43 and extending in the second direction D2, an output shaft holding portion 50 disposed at the center of the base wall 43, a plurality of center-side cam portions 60 connected to the base wall 43 and the outer peripheral wall 45, and a center-side fitting portion 58.

The output shaft holding portion 50 has a cylindrical shape. The output shaft holding portion 50 has an insertion hole 51 in which the output shaft 15 is inserted and splinefitted. The insertion hole 51 penetrates the base wall 43. An inner peripheral surface 50A of the output shaft holding portion 50 defining the insertion hole 51 includes a plurality of spline grooves formed along the axial directions. The output shaft 15 is coupled to the output shaft holding portion 50.

As illustrated in FIG. 2, the outer peripheral wall 45 of the clutch center 40 is disposed radially outward of the output shaft holding portion 50. An outer peripheral surface 45A of the outer peripheral wall 45 includes a spline fitting portion 46. The spline fitting portion 46 includes a plurality of center-side fitting teeth 47 extending in the axial directions of the clutch center 40 along the outer peripheral surface 45A of the outer peripheral wall 45, a plurality of spline grooves 48 each formed between adjacent ones of the center-side fitting teeth 47 and extending in the axial directions of the clutch center 40, and oil flow holes 49. The center-side fitting teeth 47 hold the output-side rotating plates 22. The plurality of center-side fitting teeth 47 are arranged in the circumferential directions S. The plurality of center-side fitting teeth 47 are arranged at regular intervals in the circumferential directions S. The plurality of center-side fitting teeth 47 have the same shape. The center-side fitting teeth 47 project radially outward from the outer peripheral surface 45A of the outer peripheral wall 45. The number of the center-side fitting teeth 47 is preferably a multiple of the number of the center-side cam portions 60. In this preferred embodiment, as described later, the number of the center-side cam portions 60 is three, and the number of the center-side fitting teeth 47 is 30. The number of the center-side fitting teeth 47 may not be a multiple of the number of the center-side cam portions 60. The oil flow holes 49 penetrate the outer peripheral wall 45 along the radial directions. Each of the oil flow holes 49 is formed between adjacent ones of the center-side fitting teeth 47. That is, the oil flow holes 49 are formed in the spline grooves 48. The oil flow holes 49 are formed at the sides of the center-side cam portions 60. More specifically, the discharge holes 49 are formed at the sides of the center-side slipper cam surfaces 60S of the center-side cam portions 60. The oil flow holes 49 are located ahead of the center-side slipper cam surfaces 60S in the first circumferential direction S1. The oil flow holes 49 are located ahead of bosses 54 described later in the second circumferential direction S2. In this preferred embodiment, three oil flow holes 49 are formed in each of three portions of the outer peripheral wall 45 in the circumferential directions S. The oil flow holes 49 are arranged at regular intervals in the circumferential directions S. The oil flow holes 49 cause the inside and outside of the clutch center 40 to communicate with each other. The oil flow holes 49 allow clutch oil that has flowed from the output shaft 15 into the clutch center 40 to be discharged to the outside of the clutch center 40. In this preferred embodiment, the oil flow holes 49 allow clutch oil flowing at an outer peripheral wall 45 of the inner peripheral surface 45B to be discharged to the outside of the clutch center 40. At least one or more of the oil flow holes 49 are located at positions facing a pressure-side fitting portion 88 described later.

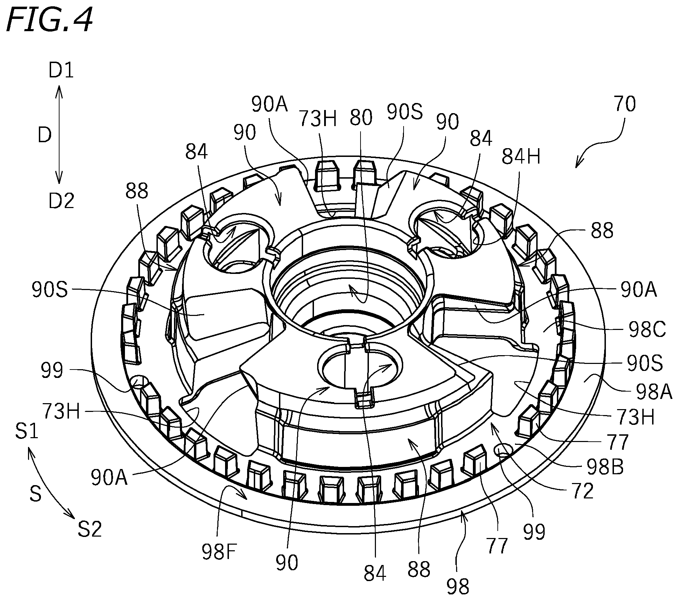

The output-side rotating plates 22 are held by the spline fitting portion 46 of the clutch center 40 and the pressure plate 70. A portion of the output-side rotating plates 22 is held by the center-side fitting teeth 47 of the clutch center 40 and the spline grooves 48 by spline fitting. Another portion of the output-side rotating plates 22 is held by pressure-side fitting teeth 77 (see FIG. 4) described later of the pressure plate 70. The output-side rotating plates 22 are displaceable along the axial directions of the clutch center 40. The output-side rotating plates 22 are rotatable together with the clutch center 40.

The output-side rotating plates 22 are pushed against the input-side rotating plates 20. The output-side rotating plates 22 are ring-shaped flat plates. Each of the output-side rotating plates 22 is shaped by punching a thin plate of an SPCC material into a ring shape. The front and back surfaces of the output-side rotating plates 22 have grooves with depths of several micrometers to several tens of micrometers to retain clutch oil. The front and back surfaces of the output-side rotating plates 22 are subjected to a surface hardening treatment to enhance abrasion resistance. The friction members provided on the input-side rotating plates 20 may be provided on the output-side rotating plates 22 instead of the input-side rotating plates 20, or may be provided on both the input-side rotating plates 20 and the output-side rotating plates 22.

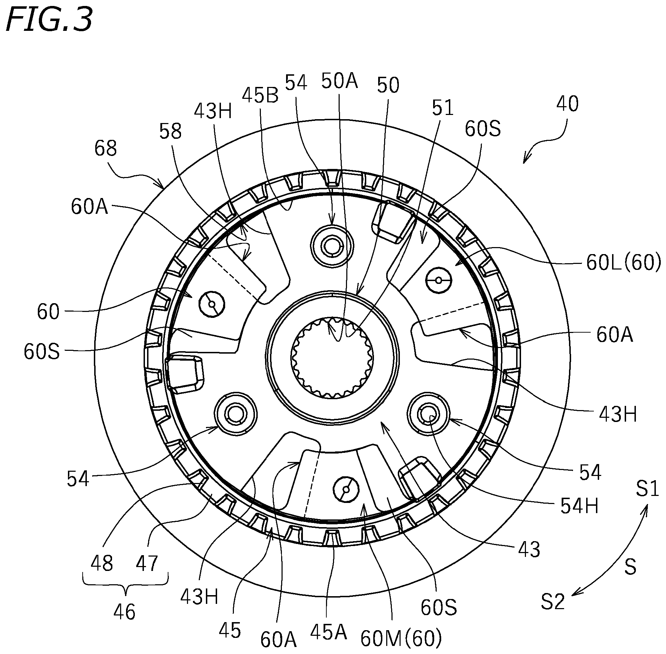

Each of the center-side cam portions 60 is formed in a trapezoidal shape including a cam surface of a slope defining an assist & slipper (registered trademark) mechanism that generates an assist torque as a force of increasing a pressing force (contact pressure force) between the input-side rotating plates 20 and the output-side rotating plates 22 or a slipper torque as a force of separating the input-side rotating plates 20 and the output-side rotating plates 22 from each other early and shifting these plates into a half-clutch state. The center-side cam portions 60 project from the base wall 43 in the second direction D2. As illustrated in FIG. 3, the center-side cam portions 60 are arranged at regular intervals in the circumferential directions S of the clutch center 40. In this preferred embodiment, the clutch center 40 includes three center-side cam portions 60, but the number of the center-side cam portions 60 is not limited to three.

As illustrated in FIG. 3, the center-side cam portions 60 are located radially outward of the output shaft holding portion 50. Each of the center-side cam portions 60 includes the center-side assist cam surface 60A and the center-side slipper cam surface 60S. The center-side assist cam surface 60A is configured to generate a force in a direction from the pressure plate 70 to the clutch center 40 (direction in which in which the pressure plate 70 approaches the clutch center 40) in order to increase a pressing force (contact pressure force) between the input-side rotating plates 20 and the output-side rotating plates 22 upon rotation relative to the pressure plate 70. In this preferred embodiment, when this force is generated, the position of the pressure plate 70 to the clutch center 40 does not change, and the pressure plate 70 does not need to approach the clutch center 40 physically. The pressure plate 70 may be physically displaced with respect to the clutch center 40. The center-side slipper cam surface 60S is configured to separate the pressure plate 70 from the clutch center 40 in order to reduce the pressing force (contact pressure force) between the input-side rotating plates 20 and the output-side rotating plates 22 upon rotation relative to the pressure plate 70. In the center-side cam portions 60 adjacent to each other in the circumferential directions S, the center-side assist cam surface 60A of one center-side cam portion 60L and the center-side slipper cam surface 60S of the other center-side cam portion 60M are opposed to each other in the circumferential directions S.

As illustrated in FIG. 2, the clutch center 40 includes the plurality of (three in this preferred embodiment) bosses 54. The bosses 54 support the pressure plate 70. The plurality of bosses 54 are arranged at regular intervals in the circumferential directions S. Each of the bosses 54 has a cylindrical shape. The bosses 54 are located radially outward of the output shaft holding portion 50. The bosses 54 extend toward the pressure plate 70 (i.e., in the second direction D2). The bosses 54 are disposed on the base wall 43. The bosses 54 have screw holes 54H in which bolts 28 (see FIG. 1) are inserted. The screw holes 54H extend in the axial directions of the clutch center 40.

As illustrated in FIGS. 2 and 3, the clutch center 40 includes center-side cam holes 43H penetrating a portion of the base wall 43. The center-side cam holes 43H penetrate the base wall 43 in the directions D. The center-side cam holes 43H extend from potions on the side of the output shaft holding portion 50 to the outer peripheral wall 45. Each of the center-side cam holes 43H is formed between the center-side assist cam surface 60A of the center-side cam portion 60 and the boss 54. When seen in the axial directions of the clutch center 40, the center-side assist cam surface 60A overlaps with a portion of the center-side cam holes 43H.

As illustrated in FIG. 2, the center-side fitting portion 58 is located radially outward of the output shaft holding portion 50. The center-side fitting portion 58 is located radially outward of the center-side cam portions 60. The center-side fitting portion 58 is disposed ahead of the center-side cam portions 60 in the second direction D2. The center-side fitting portion 58 is formed on the inner peripheral surface 45B of the outer peripheral wall 45. The center-side fitting portion 58 is slidably fitted onto a pressure-side fitting portion 88 (see FIG. 4) described later. The inner diameter of the center-side fitting portion 58 has a fitting tolerance allowing distribution of clutch oil flowing out of a distal end 15T (see FIG. 1) of the output shaft 15 to the pressure-side fitting portion 88. That is, a gap is formed between the center-side fitting portion 58 and the pressure-side fitting portion 88 described later. In this preferred embodiment, for example, the center-side fitting portion 58 has an inner diameter larger than the outer diameter of the pressure-side fitting portion 88 by 0.1 mm. This dimensional tolerance between the inner diameter of the center-side fitting portion 58 and the outer diameter of the pressure-side fitting portion 88 is appropriately set in accordance with the amount of clutch oil intended to be distributed, and is, for example, 0.1 mm or more and 0.5 mm or less.

As illustrated in FIG. 1, the pressure plate 70 is movable toward or away from the clutch center 40 and rotatable relative to the clutch center 40. The pressure plate 70 is configured to press the input-side rotating plates 20 and the output-side rotating plates 22. The pressure plate 70 is disposed coaxially with the clutch center 40 and the clutch housing 30. The pressure plate 70 includes a body 72, and a flange 98 connected to the outer edge of the body 72 on the side of the second direction D2 and extending radially outward. The body 72 projects ahead of the flange 98 in the first direction D1. The pressure plate 70 holds the plurality of output-side rotating plates 22 arranged alternately with the input-side rotating plates 20. The output-side rotating plates 22 are displaceable along the axial directions of the pressure plate 70. The output-side rotating plates 22 are rotatable together with the pressure plate 70.

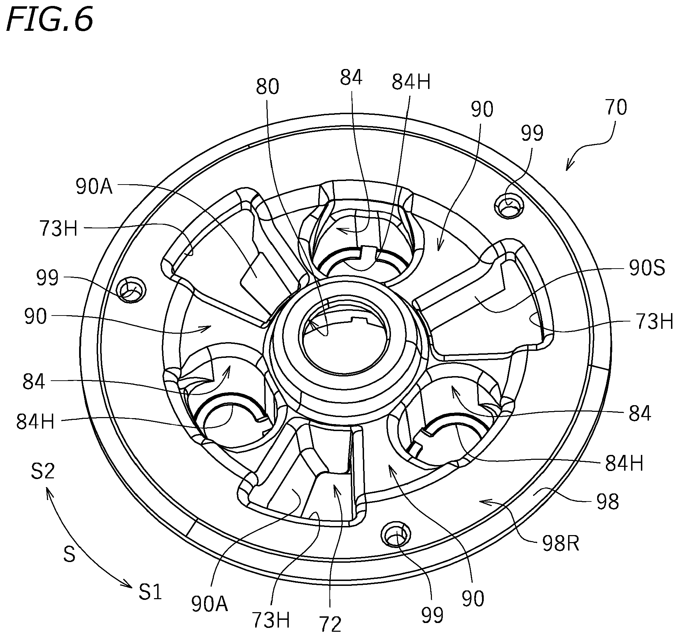

As illustrated in FIG. 4, the body 72 includes a cylindrical portion 80, the plurality of pressure-side cam portions 90, the pressure-side fitting portion 88, and spring housing portions 84 (see also FIG. 6).

As illustrated in FIG. 4, the flange 98 extends radially outward from the outer edge of the body 72. In this preferred embodiment, the flange 98 extends radially outward from the outer edge of the pressure-side fitting portion 88. The flange 98 includes a front surface 98F and a rear surface 98R (see FIG. 6). The front surface 98F is an example of a surface facing in the first direction. The rear surface 98R is an example of a surface facing in the second direction. The flange 98 includes a pressing surface 98A that applies a pressing force to the input-side rotating plates 20 and the output-side rotating plates 22, a fitting-tooth forming surface 98B located radially inward of the pressing surface 98A, and a connecting surface 98C located radially inward of the fitting-tooth forming surface 98B. The pressing surface 98A, the fitting-tooth forming surface 98B, and the connecting surface 98C are included in the front surface 98F. The pressing surface 98A directly or indirectly contacts the input-side rotating plates 20 and the output-side rotating plates 22. The pressing surface 98A is located ahead of the input-side rotating plates 20 and the output-side rotating plates 22 in the second direction D2. The pressing surface 98A and the flange 68 of the clutch center 40 sandwich the input-side rotating plates 20 and the output-side rotating plates 22. The fitting-tooth forming surface 98B is adjacent to the radially inner side of the pressing surface 98A. The fitting-tooth forming surface 98B includes the pressure-side fitting teeth 77 described later. The connecting surface 98C is connected to the body 72. In this preferred embodiment, the connecting surface 98C is connected to the pressure-side fitting portion 88. The connecting surface 98C is located between the body 72 and the pressure-side fitting teeth 77 in the radial directions. The connecting surface 98C is adjacent to the radially inner side of the fitting-tooth forming surface 98B. The fitting-tooth forming surface 98B and the connecting surface 98C are substantially flush. The expression "substantially flush" herein includes both a state where the surfaces are perfectly flush with no step difference therebetween and a state where the surfaces have a step difference of approximately 0 mm to 0.3 mm but are substantially flush. In this preferred embodiment, the fitting-tooth forming surface 98B and the connecting surface 98C are perfectly flush.

As illustrated in FIGS. 4 and 5, the flange 98 includes through holes 99. The through holes 99 penetrate the flange 98 in the directions D. In this preferred embodiment, the through holes 99 penetrate the flange 98 at three positions in the circumferential directions. The three through holes 99 are arranged at regular intervals in the circumferential directions S. The number of the through holes 99 is not limited to three. The plurality of through holes 99 may not be arranged at regular intervals. The through holes 99 are located radially inward of the pressing surface 98A. The through holes 99 are formed in the fitting-tooth forming surface 98B. In this preferred embodiment, the through holes 99 extend from the fitting-tooth forming surface 98B to the connecting surface 98C. Each of the through holes 99 is located between adjacent ones of the pressure-side fitting teeth 77 in the circumferential directions S. The through holes 99 are formed in second portions 98T of the flange 98 described later. The through holes 99 are located radially outward of the pressure-side cam portions 90. The through holes 99 are located radially outward of the pressure-side slipper cam surfaces 90S. As illustrated in FIG. 5B, in each of the through holes 99, a relationship of D1 < D2 < D3 is established where D1 is an inner diameter at an opening end 99A of the flange 98 on the side of the first direction D1, D2 is an inner diameter at a first opening end 99B of the flange 98 on the side of the second direction D2, and D3 is an inner diameter at a second opening end 99C of the flange 98 on the side of the second direction D2. In this preferred embodiment, the second opening end 99C is located ahead of the first opening end 99B in the second direction D2. Each of the through holes 99 is formed such that an opening area at the first opening end 99B and an opening area at the second opening end 99C of the flange 98 on the side of the second direction D2 are larger than an opening area at the opening end 99A of the flange 98 on the side of the first direction D1. A relationship of D1 = D2 < D3 may also be established. In this case, each through hole 99 is formed such that the opening area at the second opening end 99C of the flange 98 on the side of the second direction D2 is larger than the opening area at the opening end 99A of the flange 98 on the side of the first direction D1. In this preferred embodiment, the opening area of the through holes 99 gradually increases from the front surface 98F to the rear surface 98R of the flange 98. The inner diameter of each through hole 99 gradually increases from the front surface 98F to the rear surface 98R of the flange 98. The cross-sectional area of the through holes 99 gradually increases from the front surface 98F to the rear surface 98R of the flange 98. To allow clutch oil distributed outside the pressure plate 70 to flow into the through holes 99 more easily, the through holes 99 are subjected to a counterboring process from the rear surface 98R of the flange 98 such that the inner diameter D3 of the through hole 99 at the opening end (i.e., the second opening end 99C) on the side of the second direction D2 is the largest. In assembly of the clutch device 10, a dedicated jig is inserted in the through holes 99. This jig is inserted from the outer side (from the rear surface 98R) of the pressure plate 70 in the first direction D1. With the jig, the positions of the input-side rotating plates 20 and the output-side rotating plates 22 are adjusted. When assembly of the clutch device 10 is completed, the jig is detached, and thus, the through holes 99 are made open. Accordingly, during use of the clutch device 10, that is, during rotation of the pressure plate 70, clutch flowing toward the edge along the rear surface 98R of the pressure plate 70 easily flows through the through holes 99 by a centrifugal force. In this manner, clutch oil can be efficiently supplied to the input-side rotating plates 20 located between the pressure-side fitting teeth 77 and the output-side rotating plates 22.

The cylindrical portion 80 has a cylindrical shape. The cylindrical portion 80 is integrally formed with the pressure-side cam portions 90. The cylindrical portion 80 houses the distal end 15T of the output shaft 15 (see FIG. 1). The cylindrical portion 80 houses the release bearing 18 (see FIG. 1). The cylindrical portion 80 receives a pressing force from the push member 16B. The cylindrical portion 80 receives clutch oil that has flowed out from the distal end 15T of the output shaft 15.

Each of the pressure-side cam portions 90 is formed in a trapezoidal shape having a cam surface of a slope constituting an assist & slipper (registered trademark) mechanism that slides on the center-side cam portions 60 and generates an assist torque or a slipper torque. The pressure-side cam portions 90 project from the flange 98 in the first direction D1. As illustrated in FIG. 5A, the pressure-side cam portions 90 are arranged at regular intervals in the circumferential directions S of the pressure plate 70. In this preferred embodiment, the pressure plate 70 includes the three pressure-side cam portions 90, but the number of the pressure-side cam portions 90 is not limited to three.

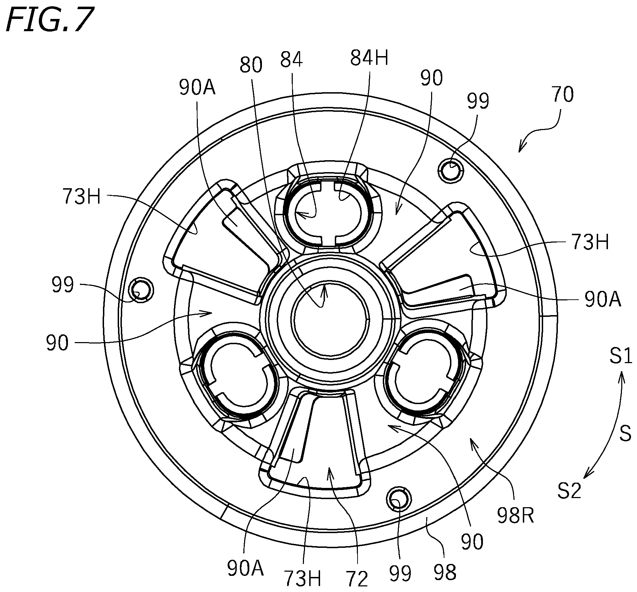

As illustrated in FIG. 5A, the pressure-side cam portions 90 are located radially outward of the cylindrical portion 80. Each of the pressure-side cam portions 90 includes a pressure-side assist cam surface 90A (see also FIG. 7) and a pressure-side slipper cam surface 90S. The pressure-side assist cam surface 90A can be brought into contact with the center-side assist cam surface 60A. The pressure-side assist cam surface 90A is configured to generate a force in a direction from the pressure plate 70 to the clutch center 40 (direction in which the pressure plate 70 approaches the clutch center 40) in order to increase a pressing force (contact pressure force) between the input-side rotating plates 20 and the output-side rotating plates 22 upon rotation relative to the clutch center 40. The pressure-side slipper cam surface 90S can be brought into contact with the center-side slipper cam surface 60S. The pressure-side slipper cam surface 90S is configured to separate the pressure plate 70 from the clutch center 40 in order to reduce a pressing force (contact pressure force) between the input-side rotating plates 20 and the output-side rotating plates 22 upon rotation relative to the clutch center 40. In the pressure-side cam portions 90 adjacent to each other in the circumferential directions S, the pressure-side assist cam surface 90A of one pressure-side cam portion 90L and the pressure-side slipper cam surface 90S of the other pressure-side cam portion 90M are opposed to each other in the circumferential directions S.

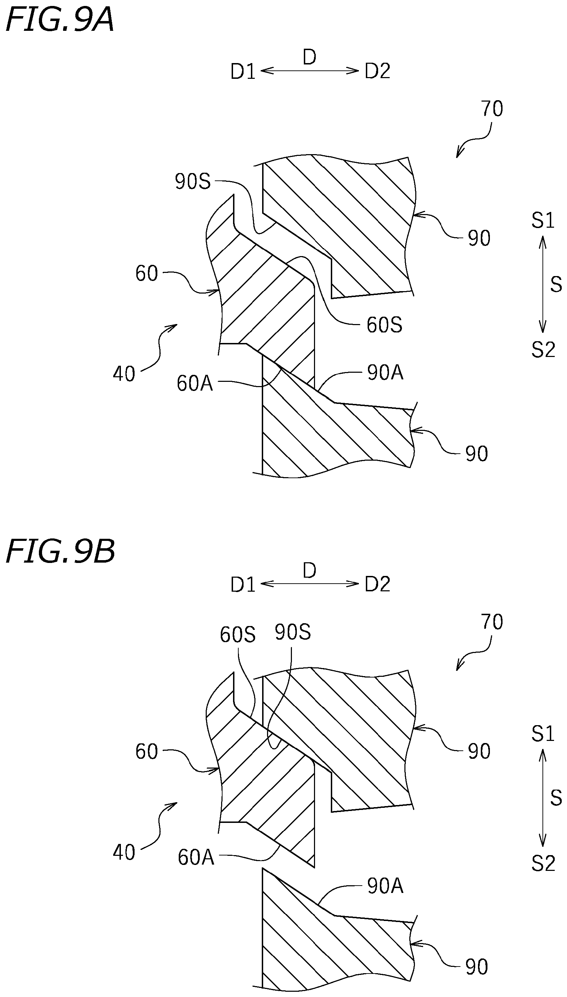

Advantages of the center-side cam portions 60 and the pressure-side cam portions 90 will now be described. When the rotation speed of the engine increases so that a rotation driving force input to the input gear 35 and the clutch housing 30 is thereby allowed to be transferred to the output shaft 15 through the clutch center 40, a rotation force in the first circumferential direction S1 is applied to the pressure plate 70, as illustrated in FIG. 9A. Thus, with the effects of the center-side assist cam surface 60A and the pressure-side assist cam surface 90A, a force in first direction D1 is generated in the pressure plate 70. Accordingly, a contact pressure force between the input-side rotating plates 20 and the output-side rotating plates 22 increases.

On the other hand, when the rotation speed of the output shaft 15 exceeds the rotation speed of the input gear 35 and the clutch housing 30 and a back torque is generated, a rotation force in the first circumferential direction S1 is applied to the clutch center 40, as illustrated in FIG. 9B. Thus, with the effects of the center-side slipper cam surface 60S and the pressure-side slipper cam surface 90S, the pressure plate 70 moves in the second direction D2 and releases a contact pressure force between the input-side rotating plates 20 and the output-side rotating plates 22. In this manner, it is possible to avoid problems in the engine and the transmission caused by the back torque.

As illustrated in FIGS. 4 and 5A, the pressure plate 70 has pressure-side cam holes 73H penetrating the body 72 and a portion of the flange 98. The pressure-side cam holes 73H are located radially outward of the cylindrical portion 80. The pressure-side cam holes 73H extend from portions on the side of the cylindrical portion 80 to the radially outside of the pressure-side fitting portion 88. The pressure-side cam holes 73H are formed through the body 72 between adjacent ones of the pressure-side cam portions 90. Each of the pressure-side cam holes 73H is formed through the body 72 between the pressure-side assist cam surface 90A of one of the pressure-side cam portions 90 and the pressure-side slipper cam surface 90S of its adjacent one of the pressure-side cam portions 90. As illustrated in FIGS. 5A and 7, when seen in the axial directions of the pressure plate 70, the pressure-side assist cam surfaces 90A overlap with a portion of the pressure-side cam holes 73H.

As illustrated in FIGS. 6 and 7, the spring housing portions 84 are formed in the pressure-side cam portions 90. The spring housing portions 84 are recessed from the second direction D2 to the first direction D1. Each of the spring housing portions 84 has an oval shape. The spring housing portions 84 house pressure springs 25 (see FIG. 1). The spring housing portions 84 include insertion holes 84H in which the bosses 54 (see FIG. 2) are inserted. That is, the insertion holes 84H penetrate the pressure-side cam portions 90. Each of the insertion holes 84H has an oval shape.

As illustrated in FIG. 1, the pressure springs 25 are housed in the spring housing portions 84. The pressure springs 25 are held by the bosses 54 inserted in the insertion holes 84H of the spring housing portions 84. The pressure springs 25 bias the pressure plate 70 toward the clutch center 40 (i.e., in the first direction D1). The pressure springs 25 are, for example, coil springs obtained by helically winding spring steel.

As illustrated in FIG. 4, the pressure-side fitting portion 88 is provided in the body 72. The pressure-side fitting portion 88 is located radially outward of the pressure-side cam portions 90. The pressure-side fitting portion 88 is located ahead of the pressure-side cam portions 90 in the second direction D2. The pressure-side fitting portion 88 is configured to slidably fit in the center-side fitting portion 58 (see FIG. 2).

As illustrated in FIG. 4, the pressure plate 70 includes the plurality of pressure-side fitting teeth 77 arranged on the flange 98. The pressure-side fitting teeth 77 hold the output-side rotating plates 22. The pressure-side fitting teeth 77 are located radially outward of the cylindrical portion 80. The pressure-side fitting teeth 77 are located radially outward of the pressure-side cam portions 90. The pressure-side fitting teeth 77 are located radially outward of the pressure-side fitting portion 88. The pressure-side fitting teeth 77 are formed on the fitting-tooth forming surface 98B of the flange 98. The pressure-side fitting teeth 77 project from the fitting-tooth forming surface 98B in the first direction D1. The pressure-side fitting teeth 77 are arranged in the circumferential directions S. The pressure-side fitting teeth 77 are arranged at regular intervals in the circumferential directions S. In this preferred embodiment, since a portion of the pressure-side fitting teeth 77 has been removed, the interval of this portion is enlarged, but the other adjacent pressure-side fitting teeth 77 are arranged at regular intervals. That is, as illustrated in FIG. 5A, the flange 98 includes first portions 98S in which a distance between adjacent pressure-side fitting teeth 77 in the circumferential directions S is a first length A1 and second portions 98T each having a second length A2 longer than the first length A1. The second portions 98T are located radially outward of the pressure-side cam portions 90. In this preferred embodiment, the second portions 98T are located radially outward of the pressure-side slipper cam surfaces 90S. The second portions 98T are located ahead of the pressure-side cam holes 73H in the first circumferential direction S1. The second portions 98T are located ahead of the spring housing portions 84 in the second circumferential direction S2.

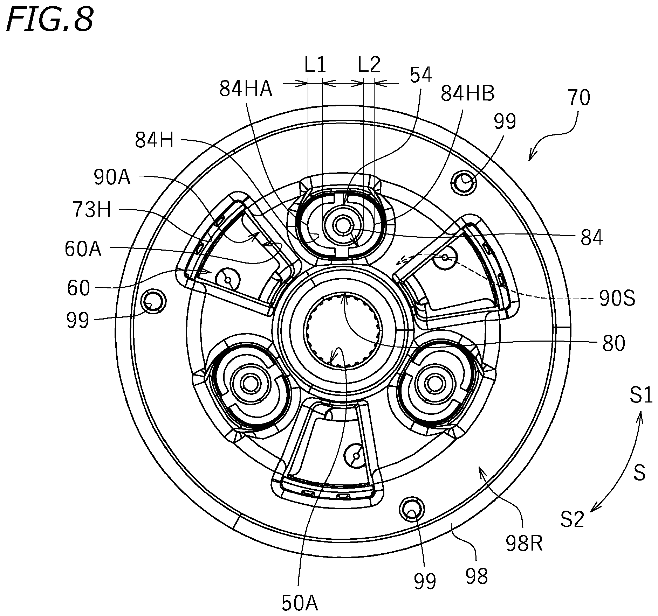

FIG. 8 is a plan view illustrating a state where the clutch center 40 and the pressure plate 70 are combined. In the state illustrated in FIG. 8, the pressure-side assist cam surface 90A and the center-side assist cam surface 60A do not contact each other, and the pressure-side slipper cam surface 90S and the center-side slipper cam surface 60S do not contact each other. At this time, the pressure plate 70 is closest to the clutch center 40. In the state illustrated in FIG. 8 (state in assembly), a distance L1 in the circumferential directions S between the boss 54 and an end 84HA of the insertion holes 84H toward the pressure-side assist cam surface 90A (i.e., ahead in the first circumferential direction S1) is smaller than a distance L2 in the circumferential directions S between the boss 54 and an end 84HB of the insertion holes 84H toward the pressure-side slipper cam surface 90S (i.e., ahead in the second circumferential direction S2) in the normal state.

As illustrated in FIG. 1, a stopper plate 100 can contact the pressure plate 70. The stopper plate 100 reduces or prevents separation of the pressure plate 70 from the clutch center 40 by a predetermined distance or more in the second direction D2. The stopper plate 100 is fixed to the bosses 54 of the clutch center 40 with the bolts 28. The pressure plate 70 is fixed by fastening the bolts 28 to the bosses 54 through the stopper plate 100 with the bosses 54 and the pressure springs 25 of the clutch center 40 disposed in the spring housing portions 84. The stopper plate 100 is substantially triangular in plan view.

When the pressure plate 70 is brought into contact with the stopper plate 100, the pressure-side slipper cam surface 90S and the center-side slipper cam surface 60S are in contact with each other in an area of 50% or more and 90% or less of the area of the pressure-side slipper cam surface 90S and 50% or more and 90% or less of the area of the center-side slipper cam surface 60S. When the pressure plate 70 is brought into contact with the stopper plate 100, the pressure springs 25 are separated from the side walls of the spring housing portions 84. That is, the pressure springs 25 are not sandwiched between the bosses 54 and the spring housing portions 84, and application of excessive stress to the bosses 54 is suppressed.

The clutch device 10 is filled with a predetermined amount of clutch oil. Clutch oil is distributed in the clutch center 40 and the pressure plate 70 through the hollow portion 15H of the output shaft 15, and then is supplied to the input-side rotating plates 20 and the output-side rotating plates 22 through the gap between the center-side fitting portion 58 and the pressure-side fitting portion 88 and the oil flow holes 49. Clutch oil is distributed outside the pressure plate 70. As indicated by arrow FS in FIG. 1, the clutch oil flows from the rear surface 98R to the front surface 98F of the flange 98 through the through holes 99 in the flange 98 to be supplied to the input-side rotating plates 20 and the output-side rotating plates 22. Clutch oil reduces or prevents absorption of heat and abrasion of friction members. The clutch device 10 according to this preferred embodiment is a so-called multiplate wet friction clutch device.

Operation of the clutch device 10 according to this preferred embodiment will now be described. As described above, the clutch device 10 is disposed between the engine and the transmission of the motorcycle, and allows or interrupts transfer of a rotation driving force of the engine to the transmission by driver's operation of a clutch operation lever.

In the clutch device 10, in a case where the driver of the motorcycle does not operate the clutch operation lever, a clutch release mechanism (not shown) does not press the push rod 16A, and thus, the pressure plate 70 presses the input-side rotating plates 20 with a biasing force (elastic force) of the pressure springs 25. Accordingly, the clutch center 40 enters a clutch-ON state in which the input-side rotating plates 20 and the output-side rotating plates 22 are pushed against each other to be friction coupled, and is rotationally driven. That is, a rotation driving force of the engine is transferred to the clutch center 40, and the output shaft 15 is rotationally driven.

In the clutch-ON state, clutch oil distributed in the hollow portion 15H of the output shaft 15 and having flowed out from the distal end 15T of the output shaft 15 is dropped or spattered in the cylindrical portion 80 and attached to the cylindrical portion 80 (see arrow F in FIG. 1). The clutch oil attached to the inside of the cylindrical portion 80 is guided into the clutch center 40. Accordingly, clutch oil flows out of the clutch center 40 through the oil flow holes 49. Clutch oil also flows out of the clutch center 40 through the gap between the center-side fitting portion 58 and the pressure-side fitting portion 88. Then, clutch oil that has flowed out of the clutch center 40 is supplied to the input-side rotating plates 20 and the output-side rotating plates 22. In addition, clutch oil distributed outside the pressure plate 70 flows toward the front surface 98F of the flange 98 through the through holes 99 (see arrow FS in FIG. 1), and is supplied to the input-side rotating plates 20 and the output-side rotating plates 22.

On the other hand, in the clutch device 10, when the driver of the motorcycle operates the clutch operation lever in the clutch-ON state, the clutch release mechanism (not shown) presses the push rod 16A, and thus, the pressure plate 70 is displaced in a direction away from the clutch center 40 (second direction D2) against a biasing force of the pressure springs 25. Accordingly, the clutch center 40 enters a clutch-OFF state in which friction coupling between the input-side rotating plates 20 and the output-side rotating plates 22 is canceled, and thus, rotational driving attenuates or stops. That is, a rotation driving force of the engine is interrupted to the clutch center 40.

In the clutch-OFF state, clutch oil distributed in the hollow portion 15H of the output shaft 15 and having flowed out of the distal end 15T of the output shaft 15 is guided into the clutch center 40 in the same manner as in the clutch-ON state. At this time, since the pressure plate 70 is separated from the clutch center 40, the amount of fitting between the pressure plate 70 and each of the center-side fitting portion 58 and the pressure-side fitting portion 88 decreases. As a result, clutch oil in the cylindrical portion 80 more actively flows out of the clutch center 40, and is distributed to portions in the clutch device 10. In particular, clutch oil can be actively guided to gaps between the input-side rotating plates 20 and the output-side rotating plates 22 separated from each other.

Then, when the driver cancels the clutch operation lever in the clutch-OFF state, pressing of the pressure plate 70 by the clutch release mechanism (not shown) through the push member 16B is canceled, and thus, the pressure plate 70 is displaced with a biasing force of the pressure springs 25 to a direction (first direction D1) of approaching the clutch center 40.

As described above, in the clutch device 10 of this preferred embodiment, the flange 98 includes the through holes 99 formed radially inward of the pressing surface 98A. Thus, clutch oil distributed outside the pressure plate 70 flows toward the pressing surface 98A by, for example, a centrifugal force through the through holes 99. Since the input-side rotating plates 20 and the output-side rotating plates 22 are located ahead of the pressing surface 98A in the first direction D1, clutch oil flowing toward the pressing surface 98A through the through holes 99 is supplied to the input-side rotating plates 20 and the output-side rotating plates 22. In this manner, since the flange 98 of the pressure plate 70 includes the through holes 99 located radially inward of the pressing surface 98A, clutch oil distributed outside the pressure plate 70 can be effectively supplied to the input-side rotating plates 20 and the output-side rotating plates 22.

In the clutch device 10 of this preferred embodiment, the opening area of the through holes 99 gradually increases from the front surface 98F of the flange 98 toward the rear surface 98R of the flange 98. In this configuration, clutch oil distributed outside the pressure plate 70 more easily flows into the through holes 99.

In the clutch device 10 of this preferred embodiment, each through hole 99 is formed such that the opening area at the first opening end 99B of the flange 98 on the side of the second direction D2 is larger than the opening area at the opening end 99A of the flange 98 on the side of the first direction D1. In this configuration, clutch oil distributed outside the pressure plate 70 more easily flows into the through holes 99.

In the clutch device 10 of this preferred embodiment, the pressure plate 70 includes the plurality of pressure-side fitting teeth 77 disposed on the flange 98, holding the output-side rotating plates 22, and arranged in circumferential directions **S.** The flange 98 includes the fitting-tooth forming surface 98B adjacent to a radially inner side of the pressing surface 98A and including the pressure-side fitting teeth 77. The through holes 99 are located in the fitting-tooth forming surface 98B. In this configuration, since the through holes 99 are located in the fitting-tooth forming surface 98B adjacent to the pressing surface 98A, a larger amount of clutch oil that has flowed into the through holes 99 flows toward the pressing surface 98A.

In the clutch device 10 of this preferred embodiment, the flange 98 includes the connecting surface 98C located between the body 72 and the pressure-side fitting teeth 77 in the radial direction and adjacent to a radially inner side of the fitting-tooth forming surface 98B, and the through holes 99 extend from the fitting-tooth forming surface 98B to the connecting surface 98C. In this configuration, the through holes 99 are relatively large, and thus, clutch oil distributed outside the pressure plate 70 more easily flows into the through holes 99.

In the clutch device 10 of this preferred embodiment, the flange 98 includes the first portions 98S in which the distance between adjacent pressure-side fitting teeth 77 in the circumferential directions S is the first length A1 and the second portions 98T each having the second length S2 larger than the first length A1, and the through holes 99 are located in the second portions 98T. In this configuration, clutch oil that has flowed into the through holes 99 more smoothly flows toward the pressing surface 98A without inhibition by the pressure-side fitting teeth 77.

In the clutch device 10 of this preferred embodiment, the pressure plate 70 includes the pressure-side cam portions 90 included in the body 72 and each including at least one of the pressure-side assist cam surface 90A and the pressure-side slipper cam surface 90S. The pressure-side assist cam surface 90A is operable to generate a force in a direction from the pressure plate 70 toward the clutch center 40 in order to increase a pressing force between the input-side rotating plates 20 and the output-side rotating plates 22 upon rotation relative to the clutch center 40. The pressure-side slipper cam surface 90S is operable to move the pressure plate 70 away from the clutch center 40 in order to reduce the pressing force between the input-side rotating plates 20 and the output-side rotating plates 22. The through holes 99 are located radially outward of the pressure-side cam portions 90. In this configuration, a portion of clutch oil that has flowed into the through holes 99 flows toward the pressure-side cam portions 90 so that clutch oil can be thereby supplied to the pressure-side assist cam surface 90A and the pressure-side slipper cam surface 90S.

In the clutch device 10 of this preferred embodiment, the fitting-tooth forming surface 98B and the connecting surface 98C are substantially flush. In this configuration, a portion of clutch oil that has flowed into the through holes 99 more smoothly flows toward the pressure-side cam portions 90 so that clutch oil can be thereby supplied to the pressure-side assist cam surface 90A and the pressure-side slipper cam surface 90S.

In the clutch device 10 of this preferred embodiment, each of the pressure-side cam portions 90 includes the pressure-side slipper cam surface 90S, and the through holes 99 are located radially outward of the pressure-side slipper cam surface 90S. This configuration further ensures supply of a portion of clutch oil that has flowed into the through holes 99 to the pressure-side slipper cam surface 90S.

The foregoing description is directed to the preferred embodiment of the present disclosure. The preferred embodiment described above, however, is merely an example, and the present disclosure can be performed in various modes.

In the preferred embodiment described above, each of the center-side cam portions 60 includes the center-side assist cam surface 60A and the center-side slipper cam surface 60S, but only needs to include at least one of the center-side assist cam surface 60A or the center-side slipper cam surface 60S.

In the preferred embodiment described above, each of the pressure-side cam portions 90 includes the pressure-side assist cam surface 90A and the pressure-side slipper cam surface 90S, but only needs to include at least one of the pressure-side assist cam surface 90A and the pressure-side slipper cam surface 90S.

In the preferred embodiment described above, the through holes 99 extend from the fitting-tooth forming surface 98B to the connecting surface 98C, but the present disclosure is not limited to this example. The through holes 99 may be formed only in the connecting surface 98C.

In the preferred embodiment described above, the output shaft holding portion 50 of the clutch center 40 and the spline fitting portion 46 formed on the outer peripheral wall 45 are integrally formed, but may be formed as separate members. That is, the clutch center 40 may include a first clutch member including the output shaft holding portion 50 and a second clutch member formed as a separate member from the first clutch member and including the spline fitting portion 46 and use the first clutch member and the second clutch member in combination.

### DESCRIPTION OF REFERENCE CHARACTERS

10 clutch device
20 input-side rotating plate
22 output-side rotating plate
40 clutch center
70 pressure plate
72 body
77 pressure-side fitting tooth
90 pressure-side cam portion
90A pressure-side assist cam surface
90S pressure-side slipper cam surface
98 flange
98A pressing surface
98B fitting-tooth forming surface
98C connecting surface
98F front surface (surface facing in the first direction)
98R rear surface (surface facing in the second direction)
98S first portion
98T second portion
99 through hole

## Claims

1. A clutch device (10) to allow or interrupt transfer of a rotation driving force of an input shaft to an output shaft (15), the clutch device (10) comprising:
a clutch center (40) housed in a clutch housing (30) holding a plurality of input-side rotating plates (20) rotationally driven by rotational driving of the input shaft, the clutch center (40) being operable to be rotationally driven together with the output shaft (15); and
a pressure plate (70) movable toward or away from the clutch center (40) and rotatable relative to the clutch center (40), the pressure plate (70) being operable to press the plurality of input-side rotating plates (20) and a plurality of output-side rotating plates (22), the input-side rotating plates (20) and the output-side rotating plates (22) being alternately arranged, wherein
the pressure plate (70) includes
a body (72),
a flange (98) extending radially outward from an outer edge of the body (72), and
a plurality of pressure-side fitting teeth (77) disposed on the flange (98), holding the output-side rotating plates (22), and arranged in circumferential directions (S),
the flange (98) includes
a pressing surface (98A) located ahead of the input-side rotating plates (20) and the output-side rotating plates (22) in a second direction (D2), the pressing surface (98A) being operable to apply a pressing force to the input-side rotating plates (20) and the output-side rotating plates (22), assuming that a direction in which the pressure plate (70) moves toward the clutch center (40) is a first direction (D1) and a direction in which the pressure plate (70) moves away from the clutch center (40) is the second direction (D2),
a through hole (99) located radially inward of the pressing surface (98A),
a fitting-tooth forming surface (98B) adjacent to a radially inner side of the pressing surface (98A) and including the pressure-side fitting teeth (77), and
a connecting surface (98C) located between the body (72) and the pressure-side fitting teeth (77) in a radial direction and adjacent to a radially inner side of the fitting-tooth forming surface (98B),
the through hole (99) is located in the fitting-tooth forming surface (98B), and
the fitting-tooth forming surface (98B) and the connecting surface (98C) are flush,
**characterized in that**
the radial width of the pressure-side fitting teeth (77) increases from the first direction (D1) toward the second direction (D2).

2. The clutch device (10) according to claim 1, wherein
the pressure plate (70) includes a pressure-side cam portion (90) included in the body (72) and including at least one of a pressure-side assist cam surface (90A) and a pressure-side slipper cam surface (90S), the pressure-side assist cam surface (90A) being operable to generate a force in a direction from the pressure plate (70) toward the clutch center (40) in order to increase a pressing force between the input-side rotating plates (20) and the output-side rotating plates (22) upon rotation relative to the clutch center (40), the pressure-side slipper cam surface (90S) being operable to move the pressure plate (70) away from the clutch center (40) in order to reduce the pressing force between the input-side rotating plates (20) and the output-side rotating plates (22), and the through hole (99) is located radially outward of the pressure-side cam portion (90).

3. The clutch device (10) according to claim 2, wherein
the pressure-side cam portion (90) includes the pressure-side slipper cam surface (90S), and
the through hole (99) is located radially outward of the pressure-side slipper cam surface (90S).

4. A motorcycle comprising the clutch device (10) according to any one of claims 1 to 3.

## Patentansprüche

1. Kupplungsvorrichtung (10) zum Ermöglichen oder Unterbrechen der Übertragung einer Drehantriebskraft einer Eingangswelle auf eine Ausgangswelle (15), wobei die Kupplungsvorrichtung (10) umfasst:
ein Kupplungszentrum (40), das in einem Kupplungsgehäuse (30) aufgenommen ist, das eine Vielzahl von eingangsseitigen Drehplatten (20) hält, die durch Drehantrieb der Eingangswelle drehend angetrieben werden, wobei das Kupplungszentrum (40) dazu ausgebildet ist, zusammen mit der Ausgangswelle (15) drehend angetrieben zu werden; und
eine Druckplatte (70), die auf das Kupplungszentrum (40) zu oder von diesem weg bewegbar und relativ zu dem Kupplungszentrum (40) drehbar ist, wobei die Druckplatte (70) dazu ausgebildet ist, die Vielzahl von eingangsseitigen Drehplatten (20) und eine Vielzahl von ausgangsseitigen Drehplatten (22) zu drücken, wobei die eingangsseitigen Drehplatten (20) und die ausgangsseitigen Drehplatten (22) abwechselnd angeordnet sind, wobei
die Druckplatte (70) umfasst
einen Körper (72),
einen Flansch (98), der sich von einem Außenrand des Körpers (72) radial nach außen erstreckt, und
eine Vielzahl von druckseitigen Passzähnen (77), die an dem Flansch (98) angeordnet sind, die ausgangsseitigen Drehplatten (22) halten und in Umfangsrichtungen (S) angeordnet sind,
wobei der Flansch (98) umfasst
eine Anpressfläche (98A), die in einer zweiten Richtung (D2) vor den eingangsseitigen Drehplatten (20) und den ausgangsseitigen Drehplatten (22) angeordnet ist, wobei die Anpressfläche (98A) dazu ausgebildet ist, eine Anpresskraft auf die eingangsseitigen Drehplatten (20) und die ausgangsseitigen Drehplatten (22) auszuüben, unter der Annahme, dass eine Richtung, in der sich die Druckplatte (70) auf das Kupplungszentrum (40) zu bewegt, eine erste Richtung (D1) ist und eine Richtung, in der sich die Druckplatte (70) von dem Kupplungszentrum (40) weg bewegt, die zweite Richtung (D2) ist,
ein Durchgangsloch (99), das radial innerhalb der Anpressfläche (98A) angeordnet ist,
eine Passzahn-Ausbildungsfläche (98B), die an eine radial innere Seite der Anpressfläche (98A) angrenzt und die druckseitigen Passzähne (77) umfasst, und
eine Verbindungsfläche (98C), die in einer Radialrichtung zwischen dem Körper (72) und den druckseitigen Passzähnen (77) angeordnet ist und an eine radial innere Seite der Passzahn-Ausbildungsfläche (98B) angrenzt,
wobei das Durchgangsloch (99) in der Passzahn-Ausbildungsfläche (98B) angeordnet ist und
die Passzahn-Ausbildungsfläche (98B) und die Verbindungsfläche (98C) bündig sind,
**dadurch gekennzeichnet, dass**
die radiale Breite der druckseitigen Passzähne (77) von der ersten Richtung (D1) zur zweiten Richtung (D2) hin zunimmt.

2. Kupplungsvorrichtung (10) nach Anspruch 1, wobei
die Druckplatte (70) einen druckseitigen Nockenabschnitt (90) umfasst, der in dem Körper (72) enthalten ist und mindestens eine aus einer druckseitigen Assistenznockenfläche (90A) und einer druckseitigen Gleitnockenfläche (90S) umfasst, wobei die druckseitige Assistenznockenfläche (90A) dazu ausgebildet ist, eine Kraft in einer Richtung von der Druckplatte (70) zum Kupplungszentrum (40) hin zu erzeugen, um bei einer Drehung relativ zu dem Kupplungszentrum (40) eine Anpresskraft zwischen den eingangsseitigen Drehplatten (20) und den ausgangsseitigen Drehplatten (22) zu erhöhen, wobei die druckseitige Gleitnockenfläche (90S) dazu ausgebildet ist, die Druckplatte (70) von dem Kupplungszentrum (40) weg zu bewegen, um die Anpresskraft zwischen den eingangsseitigen Drehplatten (20) und den ausgangsseitigen Drehplatten (22) zu verringern, und
das Durchgangsloch (99) radial außerhalb des druckseitigen Nockenabschnitts (90) angeordnet ist.

3. Kupplungsvorrichtung (10) nach Anspruch 2, wobei
der druckseitige Nockenabschnitt (90) die druckseitige Gleitnockenfläche (90S) umfasst und
das Durchgangsloch (99) radial außerhalb der druckseitigen Gleitnockenfläche (90S) angeordnet ist.

4. Motorrad, umfassend die Kupplungsvorrichtung (10) nach einem der Ansprüche 1 bis 3.

## Revendications

1. Dispositif d'embrayage (10) pour permettre ou interrompre la transmission d'une force d'entraînement en rotation d'un arbre d'entrée à un arbre de sortie (15), le dispositif d'embrayage (10) comprenant :
un centre d'embrayage (40) logé dans un carter d'embrayage (30) maintenant une pluralité de plaques rotatives côté entrée (20) entraînées en rotation par l'entraînement en rotation de l'arbre d'entrée, le centre d'embrayage (40) étant apte à être entraîné en rotation conjointement avec l'arbre de sortie (15) ; et
un plateau de pression (70) mobile vers le centre d'embrayage (40) ou à l'écart de celui-ci et rotatif par rapport au centre d'embrayage (40), le plateau de pression (70) étant apte à presser la pluralité de plaques rotatives côté entrée (20) et une pluralité de plaques rotatives côté sortie (22), les plaques rotatives côté entrée (20) et les plaques rotatives côté sortie (22) étant disposées en alternance, dans lequel
le plateau de pression (70) comprend
un corps (72),
une bride (98) s'étendant radialement vers l'extérieur depuis un bord extérieur du corps (72), et
une pluralité de dents d'ajustement côté pression (77) disposées sur la bride (98), maintenant les plaques rotatives côté sortie (22) et disposées dans des directions circonférentielles (S),
la bride (98) comprend
une surface de pression (98A) située en avant des plaques rotatives côté entrée (20) et des plaques rotatives côté sortie (22) dans une seconde direction (D2), la surface de pression (98A) étant apte à appliquer une force de pression aux plaques rotatives côté entrée (20) et aux plaques rotatives côté sortie (22), en supposant qu'une direction dans laquelle le plateau de pression (70) se déplace vers le centre d'embrayage (40) est une première direction (D1) et qu'une direction dans laquelle le plateau de pression (70) se déplace à l'écart du centre d'embrayage (40) est la seconde direction (D2),
un trou traversant (99) situé radialement à l'intérieur de la surface de pression (98A),
une surface de formation des dents d'ajustement (98B) adjacente à un côté radialement intérieur de la surface de pression (98A) et comprenant les dents d'ajustement côté pression (77), et
une surface de liaison (98C) située, dans une direction radiale, entre le corps (72) et les dents d'ajustement côté pression (77) et adjacente à un côté radialement intérieur de la surface de formation des dents d'ajustement (98B),
le trou traversant (99) étant situé dans la surface de formation des dents d'ajustement (98B), et
la surface de formation des dents d'ajustement (98B) et la surface de liaison (98C) étant affleurantes,
**caractérisé en ce que**
la largeur radiale des dents d'ajustement côté pression (77) augmente de la première direction (D1) vers la seconde direction (D2).

2. Dispositif d'embrayage (10) selon la revendication 1, dans lequel
le plateau de pression (70) comprend une partie de came côté pression (90) incluse dans le corps (72) et comprenant au moins l'une parmi une surface de came d'assistance côté pression (90A) et une surface de came de glissement côté pression (90S), la surface de came d'assistance côté pression (90A) étant apte à générer une force dans une direction allant du plateau de pression (70) vers le centre d'embrayage (40) afin d'augmenter une force de pression entre les plaques rotatives côté entrée (20) et les plaques rotatives côté sortie (22) lors d'une rotation relative au centre d'embrayage (40), la surface de came de glissement côté pression (90S) étant apte à déplacer le plateau de pression (70) à l'écart du centre d'embrayage (40) afin de réduire la force de pression entre les plaques rotatives côté entrée (20) et les plaques rotatives côté sortie (22), et
le trou traversant (99) est situé radialement à l'extérieur de la partie de came côté pression (90).

3. Dispositif d'embrayage (10) selon la revendication 2, dans lequel
la partie de came côté pression (90) comprend la surface de came de glissement côté pression (90S), et
le trou traversant (99) est situé radialement à l'extérieur de la surface de came de glissement côté pression (90S).

4. Motocyclette comprenant le dispositif d'embrayage (10) selon l'une quelconque des revendications 1 à 3.
